# EUROPEAN PATENT SPECIFICATION

(11) **EP 4 574 403 B1**
(45) Date of publication and mention of the grant of the patent: **21.10.2026**
(21) Application number: 24222205.7
(22) Date of filing: 20.12.2024
(51) Int. Cl.: B29C 70/46, B29C 31/08, B29C 70/54

(54) **STAMPING SYSTEM FOR FORMING A COMPOSITE COMPONENT FOR A STRUCTURE AND A METHOD OF STAMP FORMING**
STANZSYSTEM ZUR FORMUNG EINER VERBUNDKOMPONENTE FÜR EINE STRUKTUR UND VERFAHREN ZUR STANZFORMUNG
SYSTÈME D'ESTAMPAGE POUR FORMER UN COMPOSANT COMPOSITE POUR UNE STRUCTURE ET PROCÉDÉ DE FORMAGE D'ESTAMPAGE

(30) Priority: 22.12.2023 US 202318395340
(43) Date of publication of application: 25.06.2025
(73) Proprietor: The Boeing Company, Arlington, VA 22202 (US)
(72) Inventor: MORRISSEY, Emma Louise, 22202 Arlington, VA (US); HICKMAN, Gregory James Schoepen, 22202 Arlington, VA (US)
(74) Representative: Hoffmann Eitle

(56) References cited:
- EP-A2- 2 656 994
- WO-A1-2020/234313

## Description

### BACKGROUND

Various processes have been developed to form a composite material into a desired shape. One such process to form the composite material into the desired shape is stamp forming. Conventional stamping processes use a heater to heat a thermoplastic composite blank to a predetermined temperature, that is above a crystallization temperature. Then, the thermoplastic composite blank is introduced to a tool where pressure is applied to form the thermoplastic composite blank into the desired shape. However, the thermoplastic composite blank begins to cool as soon as the thermoplastic composite blank leaves the heater and rapidly cools when the thermoplastic composite blank contacts the tool. To achieve the desired shape during the conventional stamping process, the tool must shape the thermoplastic composite blank before a temperature below the crystallization temperature occurs.

WO 2020/234313 A1 discloses in its abstract a device for manufacturing, by shaping and/or adding polymer material, particularly by injection, a part from a composite material comprising at least one fibrous preform made of a polymer-based composite material, comprising a mould for shaping and/or adding polymer material, comprising first and second parts which are movable relative to each other to enable the mould to be opened or closed, a heating device configured to heat or keep, at a predetermined temperature, at least one portion of the fibrous preform in place in the open mould, the heating device being independent of or removable from the mould.

### SUMMARY

Therefore, it is desirable to develop a stamping system that slows heat transfer between a blank of composite material and tooling, which increases the amount of time available to form a composite component during a forming process.

The present disclosure provides a stamping system for forming a composite component for a structure. The stamping system includes a blank formed of a composite material. The composite material has a crystallization temperature. The stamping system also includes a blank heater configured to heat the blank to a melt temperature to define a heated blank. The melt temperature is above the crystallization temperature of the composite material. Furthermore, the stamping system includes a press movable to an open position to present an opening to receive the heated blank and movable to a closed position to stamp the heated blank. The press includes tooling having a predetermined configuration configured to change the heated blank to the predetermined configuration of the tooling when the press is in the closed position to stamp the heated blank. The stamping system also includes a heat transfer component cooperating with the heated blank and the tooling to delay onset of the crystallization temperature of the heated blank when the heated blank is disposed in the opening of the press.

The present disclosure also provides a method of stamp forming a composite component for a structure. A blank, formed of a composite material, is heated to a melt temperature via a blank heater to define a heated blank. The melt temperature is above a crystallization temperature of the composite material. The heated blank is inserted into an opening of a press. The press is closed on the heated blank. Pressure is applied to the heated blank while the press is closed to stamp the heated blank. The press includes tooling having a predetermined configuration configured to change the heated blank to the predetermined configuration of the tooling when the press applies the pressure to the heated blank. Heat transfer between the heated blank and the tool is controlled, via a heat transfer component, to delay onset of the crystallization temperature of the heated blank.

The detailed description and the drawings or FIGS. are supportive and descriptive of the disclosure, but the claim scope of the disclosure is defined solely by the claims.

### BRIEF DESCRIPTION OF THE DRAWINGS

FIG. 1 is a schematic perspective view of a structure illustrated as a flight vehicle.
FIG. 2 is a schematic illustration of a stamping system using a heat transfer component including a first liner and a second liner attached to tooling of a press.
FIG. 3 is a schematic illustration of the stamping system having the first liner and the second liner attached to a blank.
FIG. 4 is a schematic illustration of the stamping system having the first liner and the second liner movable into the press separately from the blank.
FIG. 5 is a schematic illustration of the stamping system using a heat transfer component including a tool heater movable via a track.
FIG. 6 is a schematic illustration of the stamping system having the tool heater movable via a robot.

The present disclosure may be extended to modifications and alternative forms, with representative configurations shown by way of example in the drawings and described in detail below. Inventive aspects of the disclosure are not limited to the disclosed configurations.
Rather, the present disclosure is intended to cover modifications, equivalents, combinations, and alternatives provided they fall within the scope of the appended claims.

### DETAILED DESCRIPTION

Those having ordinary skill in the art will recognize that all directional references (e.g., above, below, upward, up, downward, down, top, bottom, left, right, vertical, horizontal, etc.) are used descriptively for the FIGS. to aid the reader's understanding, and do not represent limitations (for example, to the position, orientation, or use, etc.) provided they fall within the scope of the appended claims. Moreover, terms such as "first," "second," "third," and so on, may be used to describe separate components. Such terminology may include the words specifically mentioned above, derivatives thereof, and words of similar import. Furthermore, the term "substantially" can refer to a slight imprecision or slight variance of a condition, quantity, value, or dimension, etc., some of which are within manufacturing variance or tolerance ranges.

As used herein, an element or step recited in the singular and preceded by the word "a" or "an" should be understood as not necessarily excluding the plural of the elements or steps. Further, any reference to "one configuration" is not intended to be interpreted as excluding the existence of additional configurations that also incorporate the recited features. Moreover, unless explicitly stated to the contrary, configurations "comprising" or "having" an element or a plurality of elements having a particular property may include additional elements not having that property. The phrase "at least one of" as used herein should be construed to include the nonexclusive logical "or", i.e., A and/or B and so on depending on the number of components.

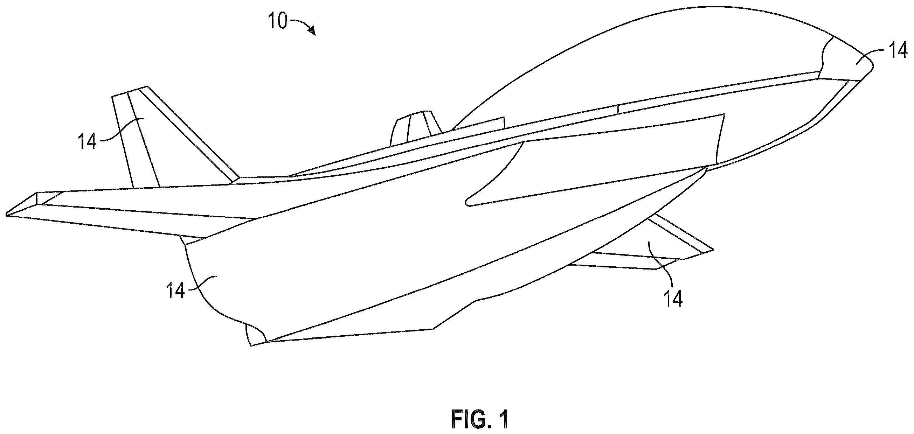

Referring to the figures, wherein like numerals indicate like or corresponding parts throughout the several views, a structure 10, being illustrated as a flight vehicle as an example structure, is generally shown in FIG. 1. The structure 10 may include components formed via stamp forming using a stamping system 12 described herein. The stamping system 12 described herein is generally used to form a composite component 14, which is ultimately assembled with various parts to create the structure 10.

The structure 10 may be any suitable configuration, and non-limiting examples may include movable platforms which may include vehicles, trains, watercraft, flight vehicles, equipment, farm equipment, robotics, etc.; non-movable platforms which may include buildings, equipment, farm equipment, robotics, etc.; or any other suitable structures. Therefore, the composite component 14 may be formed in the desired configuration to accommodate the desired structure 10, including but not limited to the movable platforms and the non-movable platforms discussed above. As suggested above, the composite component 14 may be part of the flight vehicle, and non-limiting examples of the flight vehicle may include an aircraft, a helicopter, a jet, a vertical take-off and landing (VTOL) aircraft, a space shuttle, a drone, a payload, or any other suitable flight vehicle. Therefore, the composite component 14 may be part of a wing, a fuselage, a nose, a tail, or any other suitable features of the flight vehicle. As another example, the composite component 14 may be part of a vehicle, and non-limiting examples of the vehicle may include a car, a truck, an off-road vehicle, or any other suitable vehicle.

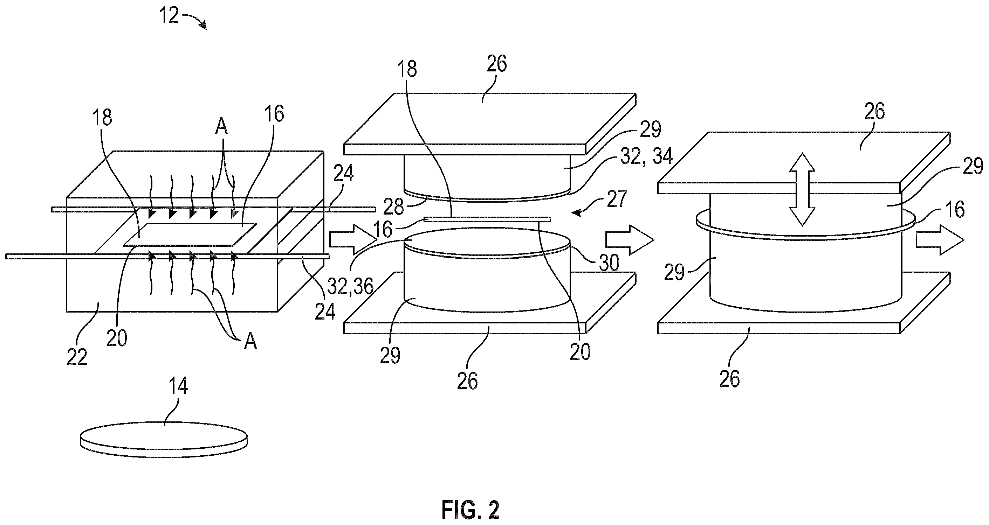

Referring to FIGS. 2-6, the stamping system 12 includes a blank 16 formed of a composite material and/or a thermoplastic polymer material. Therefore, in certain configurations, the composite material of the blank 16 may include a thermoplastic composite material. Generally, the composite material has a crystallization temperature. The blank 16 is the composite material before creating the desired shape of the composite component 14. That is, the blank 16 is the initial, unfinished, composite material that is used to ultimately create the final composite component 14. The blank 16 may include a first side 18 and a second side 20 opposing the first side 18. By using the stamping system 12 described herein, a larger variety of the types of blanks 16 may be used to form different composite components 14, such as, for example, the blank 16 may be a thin-walled structure, a structure having one or more ply ramps, a structure having complex surface features, or any other blank that may be formed using the stamping system 12 described herein.

Referring to FIGS. 2-6, the stamping system 12 also includes a blank heater 22 configured to heat the blank 16 to a melt temperature to define a heated blank 16. The melt temperature is above the crystallization temperature of the composite material. By heating the blank 16 to the melt temperature, the heated blank 16 sufficiently flows and/or is pliable to be stamped or formed into the desired shape. Once crystallization temperature is reached, the composite component 14 has solidified to the point that the composite component 14 is no longer pliable for the forming process.

For any of the configurations herein, the heated blank 16 may be movable via a movable platform 24, such as a track, a robot, a shuttle, etc. The movable platform 24 may be interconnected between multiple stations of the stamping system 12, and therefore, have been numbered the same in the figures. It is to be appreciated that the movable platform 24 may be individual, separate movable platforms 24 that move the respective parts between the respective stations of the stamping system 12.

The blank heater 22 may be any suitable configuration to heat the blank 16 to the melt temperature, and non-limiting example of the blank heater 22 may include an oven, such as an infrared oven, or any other suitable oven or heater.

The stamping system 12 further includes a press 26 movable to an open position to present an opening 27 to receive the heated blank 16 and movable to a closed position to stamp the heated blank 16. The press 26 includes tooling 29 having a predetermined configuration configured to change the heated blank 16 to the predetermined configuration of the tooling 29 when the press 26 is in the closed position to stamp the heated blank 16.

Generally, the tooling 29 may include a first face 28 and a second face 30 facing each other. The opening 27 is disposed between the first face 28 and the second face 30 when the press 26 is in the open position. The press 26 is also movable to the closed position to apply a pressure to the heated blank 16 through the tooling 29 to form the composite component 14. More specifically, the press 26 is configured to apply a predetermined amount of the pressure to the heated blank 16, through the tooling 29, for a predetermined amount of time to reach a full lamination pressure to form or stamp the blank 16 into the desired shape of the composite component 14. Therefore, the predetermined configuration of the tooling 29 is stamped onto and/or into the heated blank 16 such that a final configuration of the composite component 14 is complementary to the predetermined configuration of the tooling 29. When the heated blank 16 enters the press 26, the heated blank 16 is sufficiently flowing from being heated to the melt temperature to allow the full lamination pressure to be reached during the forming process. The press 26 may be any suitable configuration, and the tooling 29 may be any suitable configuration to form or stamp the composite component 14 to the desired configuration. In addition, the tooling 29 may be interchanged with different configurations of the tooling 29, and thus, may be detached, interchanged, and reattached to the press 26 as desired.

The stamping system 12 also includes a heat transfer component 32 cooperating with the heated blank 16 and the tooling 29 to delay onset of the crystallization temperature of the heated blank 16 when the heated blank 16 is disposed in the opening 27 of the press 26. That is, the heat transfer component 32 decelerates heat transfer between the heated blank 16 and the tooling 29 when the press 26 is closed to delay the onset of the crystallization temperature of the heated blank 16. As such, the heat transfer component 32 decelerates heat transfer from the heated blank 16 when the press 26 is closed to delay the onset of the crystallization temperature of the heated blank 16. By slowing down heat transfer, the cooling rate of the heated blank 16 is reduced, and thus, additional time is obtained to reach and maintain the full lamination pressure during the forming process. Therefore, by slowing down the cooling rate, a larger variety of the types of blanks 16 may be used to form different composite components 14. Furthermore, by slowing down the cooling rate, visco-elastic behavior of the heated blank 16 is controllable.

The stamping system 12 may use various different features or ways to obtain the desired heating to delay the onset of the crystallization temperature, and some of these configurations are discussed below.

For example, referring to FIGS. 2-4, the heat transfer component 32 may include a first liner 34 and a second liner 36. The first liner 34 and the second liner 36 may be in different locations depending on the configuration of FIGS. 2-4. Generally, in these configurations of FIGS. 2-4, each of the first liner 34 and the second liner 36 creates a barrier configured to delay the onset of the crystallization temperature of the heated blank 16. In other words, the heat transfer component 32 may act as a barrier, buffer, insulator, or similarly, to slow down the cooling rate of the heated blank 16. Therefore, generally, the first liner 34 and the second liner 36 reduce the heat-transfer rate between the blank 16 and the tooling 29.

The first liner 34 and the second liner 36 may be any suitable materials to delay the onset of the crystallization temperature, and non-limiting examples of the materials may include metallic material(s), polymer material(s), or any other suitable materials to delay the onset of the crystallization temperature. More specifically, examples of the materials of the first liner 34 and the second liner 36 may include steel, polyimide, Kapton, etc. Generally, the first liner 34 and the second liner 36 may be formed as a film, a layer, a foil, etc. Therefore, if using Kapton as the liners 34, 36, the liners 34, 36 are generally referred to as Kapton foil. Furthermore, if using steel as the liners 34, 36, the liners 34, 36 are generally referred to as steel foil. Generally, if using steel, the steel foil is a low-thermally-conductive type of steel material.

Turning to FIG. 2, the heat transfer component 32 is attached or affixed to the tooling 29. More specifically, the first liner 34 and the second liner 36 are attached to the tooling 29. That is, the first liner 34 covers the first face 28 of the tooling 29 and the second liner 36 covers the second face 30 of the tooling 29. Generally, when the press 26 is closed, the heated blank 16 is sandwiched between the first face 28 and the second face 30, to apply pressure to the heated blank 16. Therefore, the first liner 34 abuts the first side 18 of the heated blank 16 and the second liner 36 abuts the second side 20 of the heated blank 16 when pressure is applied to the heated blank 16 via the tooling 29 through the press 26 which decelerates heat transfer from the heated blank 16 to delay the onset of the crystallization temperature of the heated blank 16.

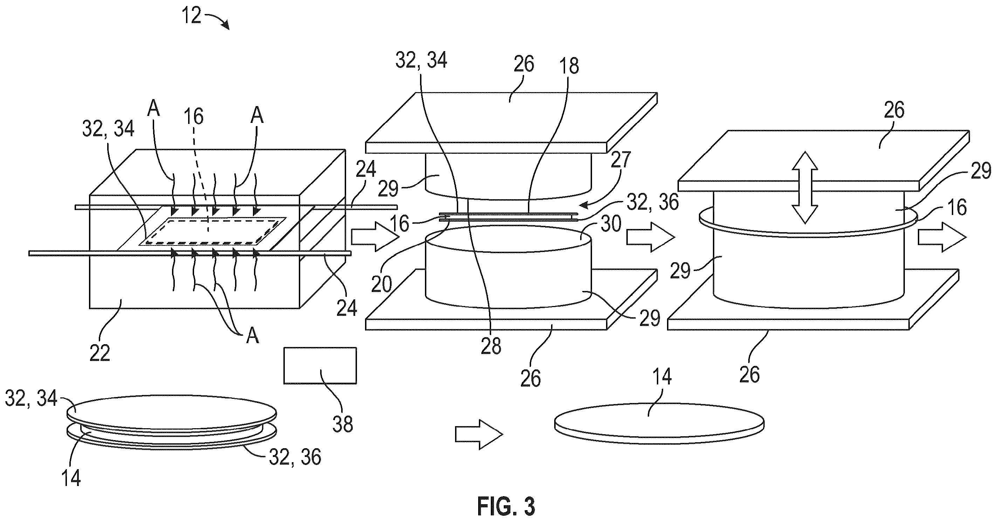

Turning to FIG. 3, in this configuration, the heat transfer component 32 is temporarily attached to the blank 16. More specifically, the first liner 34 and the second liner 36 are removably attached to the blank 16. That is, the first liner 34 covers the first side 18 of the blank 16 and the second liner 36 covers the second side 20 of the blank 16 during the forming process. Generally, when the press 26 is closed, the heated blank 16 is sandwiched between the first face 28 of the tooling 29 and the second face 30 of the tooling 29, to apply pressure to the heated blank 16. Therefore, the first liner 34 abuts the first face 28 of the tooling 29 and the second liner 36 abuts the second face 30 of the tooling 29 when pressure is applied to the heated blank 16 via the tooling 29 through the press 26 which decelerates heat transfer from the heated blank 16 to delay the onset of the crystallization temperature of the heated blank 16. That is, the heat transfer component 32 decelerates heat transfer from the heated blank 16 when the press 26 is closed to delay the onset of the crystallization temperature of the heated blank 16.

Continuing with FIG. 3, the stamping system 12 may include an end effector 38 configured to remove the first liner 34 and the second liner 36 from the composite component 14 when the press 26 is re-opened after forming the composite component 14. That is, once the composite component 14 is formed in the tooling 29, the press 26 is reopened, and the composite component 14 is movable out of the press 26 by a movable platform 24, such as a track, a robot, a shuttle, etc. Then, the end effector 38 may grab, engage, etc., the first liner 34 to de-attach or remove the first liner 34 from the first side 18 of the composite component 14. Then, the end effector 38 may grab, engage, etc., the second liner 36 to de-attach or remove the second liner 36 from the second side 20 of the composite component 14. The end effector 38 may be attached to a movable arm and/or a robot. It is to be appreciated that the end effector 38 may first remove the first liner 34 from the first side 18 and then remove the second liner 36 from the second side 20, or, the end effector 38 may first remove the second liner 36 from the second side 20 and then remove the first liner 34 from the first side 18. Alternatively, the end effector 38 may remove the first liner 34 and the second liner 36 at the same time or simultaneously.

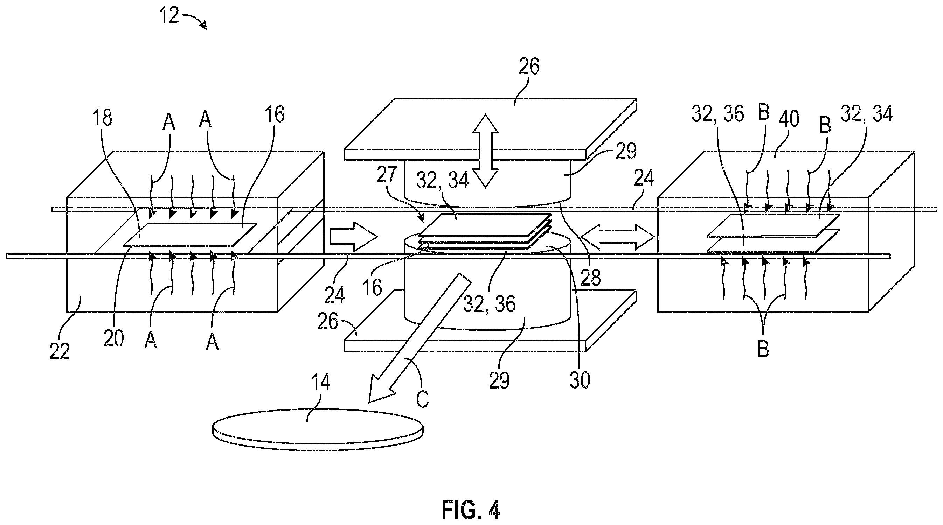

Turning to FIG. 4, the heat transfer component 32 is separate from the blank 16 and the press 26/the tooling 29. That is, the heat transfer component 32 is not attached nor affixed to the blank 16, and similarly, not attached nor affixed to the tooling 29. In the configuration of FIG. 4, two heaters 22, 40 are used, one for the press 26/the tooling 29 and one for the blank 16. As discussed above, the blank heater 22 is used to heat the blank 16 to the melt temperature. Furthermore, the stamping system 12 may include a liner heater 40 configured to heat the first liner 34 and the second liner 36 to a predetermined temperature to define a heated first liner 34 and a heated second liner 36. The liner heater 40 may be any suitable configuration to heat the first liner 34 and the second liner 36 to the melt temperature, and non-limiting examples may include an oven, such as but not limited to conductive heating or inductive heating, or any other suitable heater. Also, in the example of FIG. 4, the first liner 34 and the second liner 36 may be formed of the foil, such as but not limited to, steel foil.

Once the heated first liner 34 and the heated second liner 36 are at the predetermined temperature, the heated first liner 34 and the heated second liner 36 are movable into the press 26 to heat the first face 28 of the tooling 29 and the second face 30 of the tooling 29. Additionally, when the blank 16 is heated to the melt temperature, the heated blank 16 is then movable into the press 26. Therefore, the heated blank 16, the heated first liner 34, and the heated second liner 36 are disposed in the opening 27 of the press 26 such that the heated first liner 34 is disposed between the first side 18 of the heated blank 16 and the tooling 29 and the heated second liner 36 is disposed between the second side 20 of the heated blank 16 and the tooling 29. More specifically, when the heated blank 16 is disposed inside of the press 26, the heated first liner 34 is disposed between the first side 18 of the heated blank 16 and the first face 28 of the tooling 29, and the heated second liner 36 is disposed between the second side 20 of the heated blank 16 and the second face 30 of the tooling 29. When the press 26 is closed, the heated blank 16 is sandwiched between the heated first liner 34, the heated second liner 36, the first face 28 of the tooling 29, and the second face 30 of the tooling 29.

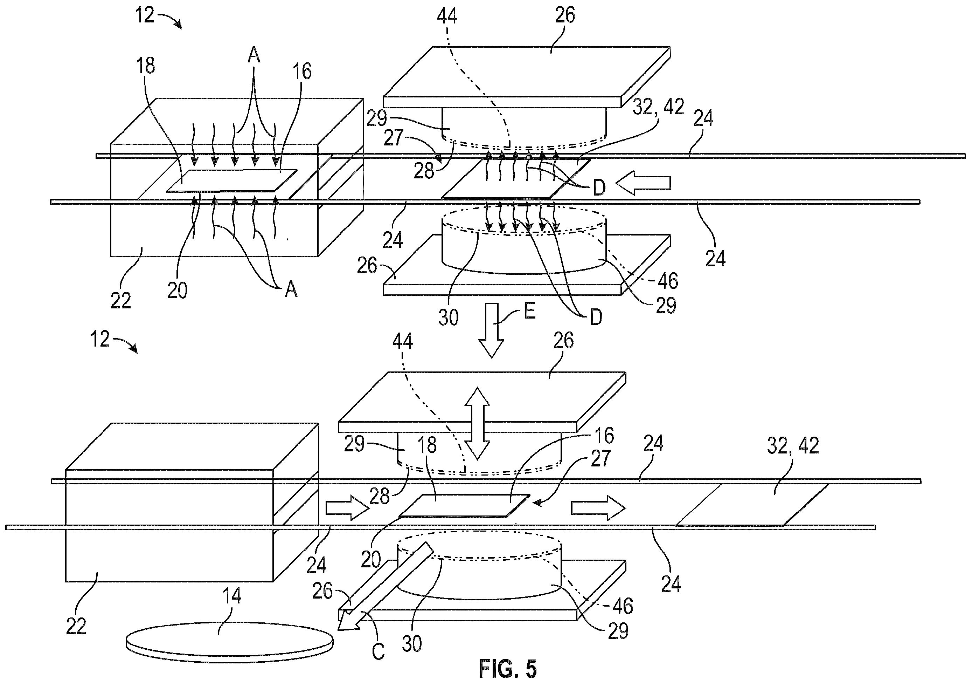

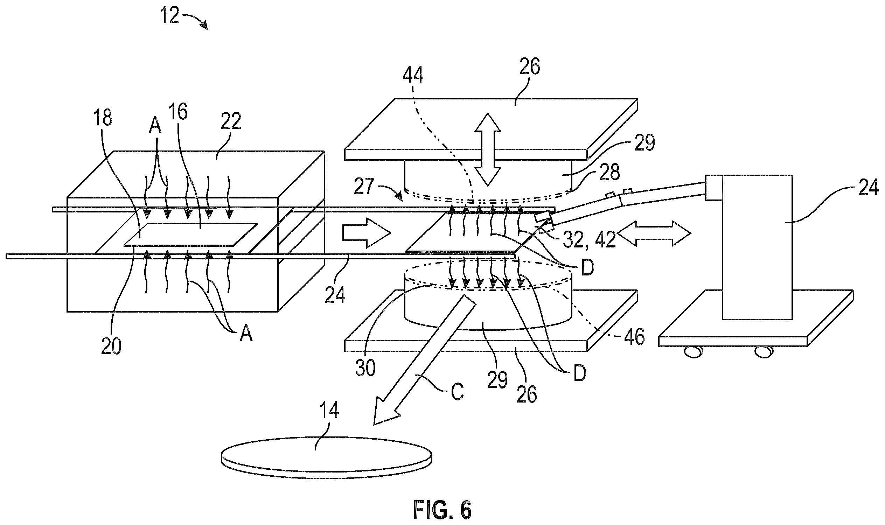

Referring to FIGS. 5 and 6, yet other configurations of the heat transfer component 32 are illustrated. In these configurations, the heat transfer component 32 may include a tool heater 42 configured to heat the first face 28 of the tooling 29 and the second face 30 of the tooling 29 inside of the opening 27 of the press 26. Generally, the tool heater 42 may include a movable platform 24 configured to move the tool heater 42 into the opening 27 of the press 26 in an initial heating state to heat the first face 28 (of the tooling 29) and the second face 30 (of the tooling 29) to a predetermined temperature. The movable platform 24 may also move out of the opening 27 of the press 26 in a final heated state when the predetermined temperature is reached.

The movable platform 24 may be any suitable configuration, and non-limiting examples may include a track as shown in FIG. 5, shuttling rail, a robot and/or robotic arm as shown in FIG. 6, or any other suitable movable platform to move the tool heater 42 into and out of the press 26. In addition, the tool heater 42 may be any suitable configuration, and non-limiting examples may include an infrared heater, an inductive heater, a conductive heater, or any other suitable tool heater to heat the first face 28 and the second face 30 of the tooling 29.

If the tool heater 42 is the inductive heater, the tool heater 42 may include a first susceptor 44 attached to, or embedded in, the first face 28 of the tooling 29, and a second susceptor 46 attached to, or embedded in, the second face 30 of the tooling 29. The first susceptor 44 and the second susceptor 46 cooperates with the inductive heater to inductively heat the first face 28 and the second face 30 of the tooling 29. For illustrative purposes, the first susceptor 44 and the second susceptor 46 are illustrated as dash-dot-dot-dashed lines in FIGS. 5 and 6, to indicate the optional feature of using the susceptors 44, 46 if the tool heater 42 is the inductive heater.

The present disclosure also provides a method of stamp forming the composite component 14 for the structure 10. By using this stamping system 12 and the method, thin-walled structures, small-scale structures, and/or complex structures may be stamp formed on a large scale, and equipment requirements may be reduced. As such, high-rate fabrication of the composite components 14 may be obtained using this stamping system 12 and the method herein. The method may have different steps or processes depending on the type of the heat transfer component 32 being used, and each of which are discussed below.

Generally, for any of the configurations herein, the blank 16 is heated to the melt temperature via the blank heater 22 to define the heated blank 16. As discussed above, the melt temperature is above the crystallization temperature of the composite material. The plurality of arrows A in FIGS. 2-6 are representative of heating of the blank 16 in the blank heater 22. Again, as discussed above, the blank 16 is formed of the composite material.

Next, the heated blank 16 is inserted into the opening 27 of the press 26. For any of the configurations herein, the heated blank 16 may be movable via the movable platform 24. The press 26 is in the open position to receive the heated blank 16. That is, once the blank 16 is heated above the crystallization temperature, the heated blank 16 moves to the press 26 to stamp the heated blank 16 into the desired configuration.

Next, the press 26 is closed on the heated blank 16. That is, once the heated blank 16 is disposed in the opening 27 of the press 26, the press 26 moves to the closed position. Then, pressure is applied to the heated blank 16 while the press 26 is closed to stamp the heated blank 16. As discussed above, the tooling 29 of the press 26 has the predetermined configuration configured to change the heated blank 16 to the predetermined configuration of the tooling 29 when the press 26 applies the pressure to the heated blank 16. More specifically, once the press 26 is in the closed position, the press 26 may apply pressure to the heated blank 16, through the tooling 29, to stamp or form the heated blank 16 into the desired form. The pressure applied to the heated blank 16, via the tooling 29 through the press 26, continues until the full lamination pressure is reached, and optionally, maintained for a predetermined amount of time, which completes the process of forming/stamping the composite component 14.

Once the heated blank 16 exits the blank heater 22, the heated blank 16 begins to cool. Also, once engagement or contact occurs between the heated blank 16 and the tooling 29, heat transfer occurs. Furthermore, as the pressure is applied to the heated blank 16 via the tooling 29, heat transfer occurs. Therefore, it is desirable to slow down this heat transfer. As such, the heat transfer component 32 described herein controls heat transfer to delay onset of the crystallization temperature of the heated blank 16. Hence, the method also includes controlling, via the heat transfer component 32, heat transfer between the heated blank 16 and the tooling 29 to delay onset of the crystallization temperature of the heated blank 16. By controlling heat transfer, the pressing time may be increased, which ensures that the time to reach full lamination pressure is achieved. In other words, by controlling heat transfer as described herein, the heated blank 16 may be pressed for a longer period of time if desired.

When a predetermined amount of time has occurred for applying the pressure, the press 26 opens and the stamp formed composite component 14 is removed from the press 26. Simply stated, the composite component 14 is removed from the press 26 after forming the composite component 14. Therefore, to remove the completed composite component 14, the press 26 moves back to the open position to remove the composite component 14 therefrom. Now, the stamping process of the composite component 14 is complete, and the composite component 14 may move to a finishing process or assembly process as desired.

Returning to the heat transfer component 32, next, each of the configurations are described in relation to the method.

Turning to FIGS. 2-4, in these configurations, the heat transfer component 32 includes the first liner 34 and the second liner 36. As discussed above, each of the first liner 34 and the second liner 36 creates the barrier to delay the onset of the crystallization temperature. Controlling, via the heat transfer component 32, heat transfer between the heated blank 16 and the tooling 29 further includes controlling, via the first liner 34 and the second liner 36, heat transfer between the heated blank 16 and the tooling 29 to delay onset of the crystallization temperature of the heated blank 16.

Referring to FIG. 2, in this configuration, the first liner 34 covers the first face 28 of the tooling 29 and the second liner 36 covers the second face 30 of the tooling 29. The first liner 34 and the second liner 36 are affixed to the first face 28 and the second face 30, respectively, of the tooling 29. Therefore, the first liner 34 and the second liner 36 remain attached to the tooling 29 during the process of forming the composite component 14. For example, when the press 26 moves to the open position and the closed position, the first liner 34 and the second liner 36 correspondingly move.

Continuing with FIG. 2, in this configuration, controlling, via the first liner 34 and the second liner 36, heat transfer between the heated blank 16 and the tooling 29 further includes abutting the first liner 34 to the first side 18 of the heated blank 16 and abutting the second liner 36 to the second side 20 of the heated blank 16 when applying pressure to the heated blank 16 via the press 26. During the pressing process, the heated blank 16 is sandwiched between the first face 28 of the tooling 29 and the first liner 34 relative to the first side 18 of the heated blank 16, and sandwiched between the second face 30 of the tooling 29 and the second liner 36 relative to the second side 20 of the heated blank 16. The first liner 34 and the second liner 36 create the barrier between the heated blank 16 and the first face 28 and the second face 30 to delay the onset of the crystallization temperature during stamping in the press 26. Once the pressing process is complete, the press 26 opens to move back to the open position and the composite component 14 is removed from the press 26. Since the first liner 34 and the second liner 36 are attached to the tooling 29, these liners 34, 36 may be reused to repeat the forming process for a new blank.

Referring to FIG. 3, in this configuration, the first liner 34 covers the first side 18 of the blank 16 and the second liner 36 covers the second side 20 of the blank 16. That is, the first liner 34 and the second liner 36 are attached to the blank 16. However, the liners 34, 36 attached to the blank 16 are temporary until after the composite component 14 is stamped or formed, which is discussed further below.

Continuing with FIG. 3, in this configuration, controlling, via the first liner 34 and the second liner 36, heat transfer between the heated blank 16 and the tooling 29 further includes abutting the first face 28 of the tooling 29 to the first liner 34 and abutting the second face 30 of the tooling 29 to the second liner 36 when applying pressure to the heated blank 16 via the press 26. During the pressing process, the heated blank 16 is sandwiched between the first face 28 and the first liner 34 relative to the first side 18 of the heated blank 16, and sandwiched between the second face 30 and the second liner 36 relative to the second side 20 of the heated blank 16. The first liner 34 and the second liner 36 create the barrier between the heated blank 16 and the first face 28 and the second face 30 to delay the onset of the crystallization temperature during stamping in the press 26. Once the pressing process is complete, the press 26 moves back to the open position and the composite component 14 is removed from the press 26. Next, the first liner 34 is removed from the first side 18 of the composite component 14 after removing the composite component 14 from the tooling 29, and additionally, the second liner 36 is removed from the second side 20 of the composite component 14 after removing the composite component 14 from the tooling 29. The first liner 34 and the second liner 36 may be removed by the end effector 38 or any other suitable mechanism to grab/remove the liners 34, 36. Any order of removing the liners 34, 36 from the composite component 14 is suitable for this process; that is, the first liner 34 may be removed first, the second liner 34, 36 may be removed first, or both of the liners 34, 36 may be removed at the same time. Once the first liner 34 and the second liner 36 are removed from the composite component 14, the composite component 14 may move to the finishing process or the assembly process as desired. When this process is repeated for a new blank, a new first liner and a new second liner is attached to the new blank.

Turning to FIG. 4, in this configuration, the first liner 34 and the second liner 36 are not attached to the press 26/the tooling 29 nor attached to the heated blank 16. Instead, the first liner 34 and the second liner 36 are movable independently of the heated blank 16 into the press 26, and the first liner 34 and the second liner 36 are heated separately from the blank 16. Therefore, in this configuration, the first liner 34 and the second liner 36 are heated via the liner heater 40 to define the heated first liner 34 and the heated second liner 36. Arrows B in FIG. 4 are representative of heating of the first liner 34 and the second liner 36 in the liner heater 40. Generally, heating the blank 16 via the blank heater 22 and heating the first liner 34 and the second liner 36 via the liner heater 40 occurs before inserting the blank 16 into the opening 27 of the press 26. In certain configurations, heating the blank 16 via the blank heater 22 and heating the first liner 34 and the second liner 36 via the liner heater 40 occurs at the same time.

Again, continuing with FIG. 4, once the blank 16 reaches the melt temperature, the heated blank 16 moves into the press 26, and once the first liner 34 and the second liner 36 reach the predetermined temperature, the first liner 34 and the second liner 36 move into the press 26. More specifically, the first liner 34 and the second liner 36 enter the press 26 from the liner heater 40 while the heated blank 16 enters the press 26 from the blank heater 22. Therefore, inserting the heated blank 16 into the opening 27 of the press 26 further includes inserting the heated first liner 34, the heated second liner 36, and the heated blank 16 into the opening 27 of the press 26 such that the heated first liner 34 is disposed between the first side 18 of the heated blank 16 and the tooling 29, and the heated second liner 36 is disposed between the second side 20 of the heated blank 16 and the tooling 29. During the pressing process, the heated blank 16 is sandwiched between the first face 28 and the first liner 34 relative to the first side 18 of the heated blank 16, and sandwiched between the second face 30 and the second liner 36 relative to the second side 20 of the heated blank 16. The first liner 34 and the second liner 36 create the barrier between the heated blank 16 and the first face 28 and the second face 30 to delay the onset of the crystallization temperature during stamping in the tooling 29. Once the pressing process is complete, the press 26 moves back to the open position and the composite component 14 is removed from the press 26 (arrow C in FIG. 4 is pointing at the composite component 14 after removal from the press 26), and the first liner 34 and the second liner 36 return to the liner heater 40 where the first liner 34 and the second liner 36 may be reheated to repeat the stamping/forming process for another blank.

Referring to FIGS. 5 and 6, in these configurations, generally, the tooling 29 is heated, and therefore, the first liner 34 and the second liner 36 are eliminated. In these configurations, the heat transfer component 32 includes the tool heater 42. As such, the first face 28 of the tooling 29 is heated via the tool heater 42 and the second face 30 of the tooling 29 is heated via the tool heater 42 before inserting the heated blank 16 into the opening 27 of the press 26. More specifically, the tool heater 42 enters the press 26 to heat the first face 28 and the second face 30 of the tooling 29 while the blank 16 is heated in the blank heater 22 at a separate location. The plurality of arrows D in FIGS. 5 and 6 are representative of heating of the first face 28 and the second face 30 of the tooling 29 via the tool heater 42. The movable platform 24 controls movement of the tool heater 42, and for illustrative purposes, FIG. 5 illustrates the movable platform 24 as the track, and FIG. 6 illustrates the movable platform 24 as the robot. Regardless of the configuration of the movable platform 24, the movable platform 24 controls movement of the tool heater 42 relative to the tooling 29 and the tool heater 42.

Continuing with FIGS. 5 and 6, the tool heater 42 is inserted into the opening 27 of the press 26 to heat the first face 28 and the second face 30, and once the first face 28 and the second face 30 reach the predetermined temperature, the tool heater 42 is removed from the opening 27 of the press 26, and then, the heated blank 16 may be inserted into the opening 27 of the press 26. That is, removing the tool heater 42 occurs before inserting the heated blank 16 into the opening 27 of the press 26. Arrow E in FIG. 5 is illustrative of moving to the next stage of this process after the tooling 29 has been heated and the blank 16 has been heated.

During the pressing process of FIGS. 5 and 6, the heated blank 16 is sandwiched between the first face 28 and the second face 30 of the tooling 29. By pre-heating the first face 28 and the second face 30 via the tool heater 42, the first face 28 and the second face 30 create the barrier between the heated blank 16 and the first face 28 and the second face 30 to delay the onset of the crystallization temperature during stamping in the press 26. Once the pressing process is complete, the press 26 opens, and thus, moves back to the open position and the composite component 14 is removed from the tooling 29 (arrow C in FIGS. 5 and 6 is pointing at the composite component 14 after removal from the press 26). Then, the composite component 14 may move to the finishing process or the assembly process as desired.

It is to be appreciated that the order or sequence of performing the method as described above is for illustrative purposes and other orders or sequences are within the scope of the present teachings. It is to also be appreciated that the method can include other features not specifically described immediately above.

Furthermore, the teachings may be described herein in terms of functional and/or logical block components and/or various processing steps. Therefore, a controller may control the stamp forming process described herein. For example, the controller may be in communication with the heaters 22, 40, 42, the press 26, any sensors, the movable platform 24, etc. As such, the controller may determine/monitor temperatures of the heaters 22, 40, 42, the blank 16, the liners 34, 36, etc., and use this information to determine when to move the heated blank 16, open/close the press 26, when and how long to apply pressure to the heated blank 16, move the liners 34, 36, etc. Therefore, the controller may include a processor and a memory, configured to execute instructions from the memory, via the processor to control the stamping system 12 and associated method. It should be realized that such block components may be comprised of any number of hardware, software, and/or firmware components configured to perform the specified functions.

For example, the controller may be a host machine or distributed system, e.g., a computer such as a digital computer or microcomputer, and, as the memory, tangible, nontransitory computer-readable memory such as read-only memory (ROM) or flash memory. The controller may also have random access memory (RAM), electrically erasable programmable read-only memory (EEPROM), a high-speed clock, analog-to-digital (A/D) and/or digital-to-analog (D/A) circuitry, and any required input/output circuitry and associated devices, as well as any required signal conditioning and/or signal buffering circuitry. Therefore, the controller may include all software, hardware, memory, algorithms, connections, sensors, etc., necessary to control, for example, the stamping system 12. As such, the control method operative to control the stamping system 12 may be embodied as software or firmware associated with the controller. It is to be appreciated that the controller may also include any device capable of analyzing data from various sensors, comparing data, making the necessary decisions required to control and/or monitor the stamping system 12. Optionally, more than one controller may be utilized, and be in communication with each other.

While the best modes and other configurations for carrying out the disclosure have been described in detail, those familiar with the art to which this disclosure relates will recognize various alternative designs and configurations for practicing the disclosure within the scope of the appended claims. Furthermore, the configurations shown in the drawings or the characteristics of various configurations mentioned in the present description are not necessarily to be understood as configurations independent of each other. Rather, it is possible that each of the characteristics described in one of the examples of a configuration can be combined with one or a plurality of other desired characteristics from other configurations, resulting in other configurations not described in words or by reference to the drawings. Accordingly, such other configurations fall within the framework provided they fall within the scope of the appended claims.

As used herein, a system, apparatus, structure, article, element, component, or hardware "configured to" perform a specified function is indeed capable of performing the specified function without any alteration, rather than merely having potential to perform the specified function after further modification. In other words, the system, apparatus, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware that enable the system, apparatus, structure, article, element, component, or hardware to perform the specified function without further modification. For purposes of this disclosure, a system, apparatus, structure, article, element, component, or hardware described as being "configured to" perform a particular function may additionally or alternatively be described as being "adapted to" and/or as being "operative to" perform that function.

The illustrations of the configurations described herein are intended to provide a general understanding of the structure of the various configurations. The illustrations are not intended to serve as a complete description of all of the elements and features of apparatus and systems that utilize the structures or methods described herein. Many other configurations may be apparent to those of skill in the art upon reviewing the disclosure. Other configurations may be utilized and derived from the disclosure, such that structural and logical substitutions and changes may be provided they fall within the scope of the appended claims. Accordingly, the disclosure and the figures are to be regarded as illustrative rather than restrictive.

## Claims

1. A stamping system (12) for forming a composite component (14) for a structure (10), the stamping system (12) comprising:
a blank (16) formed of a composite material;
a blank heater (22) configured to heat the blank (16) to a melt temperature which is above a crystallization temperature of the composite material to define a heated blank (16);
a press (26) movable to an open position to present an opening (27) to receive the heated blank (16) and movable to a closed position to stamp the heated blank (16), wherein the press (26) includes tooling (29) having a predetermined configuration configured to change the heated blank (16) to the predetermined configuration of the tooling (29) when the press (26) is in the closed position to stamp the heated blank (16); and
a heat transfer component (32) cooperating with the heated blank (16) and the tooling (29) to delay onset of the crystallization temperature of the heated blank (16) when the heated blank (16) is disposed in the opening (27) of the press (26).

2. The stamping system (12) as set forth in claim 1 wherein the heat transfer component (32) includes a first liner (34) and a second liner (36), wherein each of the first liner (34) and the second liner (36) creates a barrier configured to delay the onset of the crystallization temperature of the heated blank (16).

3. The stamping system (12) as set forth in claim 2 wherein:
the tooling (29) includes a first face (28) and a second face (30) facing each other and the opening (27) is disposed between the first face (28) and the second face (30) when the press (26) is in the open position;
the first liner (34) covers the first face (28) of the tooling (29) and the second liner (36) covers the second face (30) of the tooling (29); and
the first liner (34) abuts a first side (18) of the heated blank (16) and the second liner (36) abuts a second side (20) of the heated blank (16) when pressure is applied to the heated blank (16) via the tooling (29) through the press (26) which decelerates heat transfer from the heated blank (16) to delay the onset of the crystallization temperature of the heated blank (16).

4. The stamping system (12) as set forth in claim 2 wherein:
the tooling (29) includes a first face (28) and a second face (30) facing each other and the opening (27) is disposed between the first face (28) and the second face (30) when the press (26) is in the open position;
the blank (16) includes a first side (18) having the first liner (34) covering the first side (18) and a second side (20) having the second liner (36) covering the second side (20); and
the first liner (34) abuts the first face (28) of the tooling (29) and the second liner (36) abuts the second face (30) of the tooling (29) when pressure is applied to the heated blank (16) via the tooling (29) through the press (26) which decelerates heat transfer from the heated blank (16) to delay the onset of the crystallization temperature of the heated blank (16);
optionally, wherein the press (26) is movable to the closed position to apply a pressure to the heated blank (16) through the tooling (29) to form the composite component (14), wherein the heat transfer component (32) decelerates heat transfer from the heated blank (16) when the press (26) is closed to delay the onset of the crystallization temperature of the heated blank (16);
further optionally, wherein the stamping system (12) further includes an end effector (38) configured to remove the first liner (34) and the second liner (36) from the composite component (14) when the press (26) is re-opened after forming the composite component (14).

5. The stamping system (12) as set forth in claim 2:
further including a liner heater (40) configured to heat the first liner (34) and the second liner (36) to a predetermined temperature to define a heated first liner (34) and a heated second liner (36); and
wherein the heated blank (16), the heated first liner (34), and the heated second liner (36) are disposed in the opening (27) of the press (26) such that the heated first liner (34) is disposed between a first side (18) of the heated blank (16) and the tooling (29) and the heated second liner (36) is disposed between a second side (20) of the heated blank (16) and the tooling (29).

6. The stamping system (12) as set forth in claim 1 wherein the heat transfer component (32) includes a tool heater (42) configured to heat a first face (28) of the tooling (29) and a second face (30) of the tooling (29) inside of the opening (27) of the press (26);
optionally, wherein the tool heater (42) includes a movable platform (24) configured to move the tool heater (42) into the opening (27) of the press (26) in an initial heating state to heat the first face (28) and the second face (30) to a predetermined temperature, and move out of the opening (27) of the press (26) in a final heated state when the predetermined temperature is reached.

7. The stamping system (12) as set forth in claim 1 or 2 wherein the press (26) is movable to the closed position to apply a pressure to the heated blank (16) through the tooling (29) to form the composite component (14), wherein the heat transfer component (32) decelerates heat transfer from the heated blank (16) when the press (26) is closed to delay the onset of the crystallization temperature of the heated blank (16).

8. The stamping system (12) as set forth in any one of claims 2 to 6, wherein the first liner (34) and the second liner (36) are formed as a film, a layer, or a foil.

9. A method of stamp forming a composite component (14) for a structure (10), the method comprising:
heating a blank (16) to a melt temperature which is above a crystallization temperature via a blank heater (22) to define a heated blank (16), wherein the blank (16) is formed of a composite material;
inserting the heated blank (16) into an opening (27) of a press (26);
closing the press (26) on the heated blank (16);
applying a pressure to the heated blank (16) while the press (26) is closed to stamp the heated blank (16), wherein the press (26) includes tooling (29) having a predetermined configuration configured to change the heated blank (16) to the predetermined configuration of the tooling (29) when the press (26) applies the pressure to the heated blank (16); and
controlling, via a heat transfer component (32), heat transfer between the heated blank (16) and the tooling (29) to delay onset of the crystallization temperature of the heated blank (16).

10. The method as set forth in claim 9 wherein:
the heat transfer component (32) includes a first liner (34) and a second liner (36), each of the first liner (34) and the second liner (36) creates a barrier to delay the onset of the crystallization temperature; and
controlling, via the heat transfer component (32), heat transfer between the heated blank (16) and the tooling (29) further comprises controlling, via the first liner (34) and the second liner (36), heat transfer between the heated blank (16) and the tooling (29) to delay onset of the crystallization temperature of the heated blank (16).

11. The method as set forth in claim 10 wherein:
the tooling (29) includes a first face (28) and a second face (30) facing each other and the opening (27) is disposed between the first face (28) and the second face (30) when the press (26) is in the open position;
the first liner (34) covers the first face (28) of the tooling (29) and the second liner (36) covers the second face (30) of the tooling (29); and
controlling, via the first liner (34) and the second liner (36), heat transfer between the heated blank (16) and the tooling (29) further comprises abutting the first liner (34) to a first side (18) of the heated blank (16) and abutting the second liner (36) to a second side (20) of the heated blank (16) when applying pressure to the heated blank (16) via the press (26).

12. The method as set forth in claim 10 wherein:
the tooling (29) includes a first face (28) and a second face (30) facing each other and the opening (27) is disposed between the first face (28) and the second face (30) when the press (26) is in the open position;
the blank (16) includes a first side (18) having the first liner (34) covering the first side (18) and a second side (20) having the second liner (36) covering the second side (20); and
controlling, via the first liner (34) and the second liner (36), heat transfer between the heated blank (16) and the tooling (29) further comprises abutting the first face (28) of the tooling (29) to the first liner (34) and abutting the second face (30) of the tooling (29) to the second liner (36) when applying pressure to the heated blank (16) via the press (26);
optionally, wherein the method further comprises:
forming the composite component (14) from pressing the heated blank (16) in the press (26);
removing the composite component (14) from the press (26) after forming the composite component (14);
removing the first liner (34) from the first side (18) of the composite component (14) after removing the composite component (14) from the tooling (29); and
removing the second liner (36) from the second side (20) of the composite component (14) after removing the composite component (14) from the tooling (29).

13. The method as set forth in claim 10:
further comprising heating the first liner (34) and the second liner (36) via a liner heater (40) to define a heated first liner (34) and a heated second liner (36); and
wherein inserting the heated blank (16) into the opening (27) of the press (26) further comprises inserting the heated first liner (34), the heated second liner (36), and the heated blank (16) into the opening (27) of the press (26) such that the heated first liner (34) is disposed between a first side (18) of the heated blank (16) and the tooling (29), and the heated second liner (36) is disposed between a second side (20) of the heated blank (16) and the tooling (29);
optionally, wherein heating the blank (16) via the blank heater (22) and heating the first liner (34) and the second liner (36) via the liner heater (40) occurs before inserting the blank (16) into the opening (27) of the press (26).
further optionally, wherein heating the blank (16) via the blank heater (22) and heating the first liner (34) and the second liner (36) via the liner heater (40) occurs at the same time.

14. The method as set forth in claim 9:
wherein the heat transfer component (32) includes a tool heater (42); and
further comprising heating a first face (28) of the tooling (29) via the tool heater (42) and heating a second face (30) of the tooling (29) via the tool heater (42) before inserting the heated blank (16) into the opening (27) of the press (26);
optionally, further comprising removing the tool heater (42) from the opening (27) of the press (26); and
wherein removing the tool heater (42) occurs before inserting the heated blank (16) into the opening (27) of the press (26).

15. The method as set forth in any one of claims 10 to 13, wherein the first liner (34) and the second liner (36) are formed as a film, a layer, or a foil.

## Patentansprüche

1. Stanzsystem (12) zum Formen einer Verbundkomponente (14) für eine Struktur (10), wobei das Stanzsystem (12) Folgendes umfasst:
einen Rohling (16), geformt aus einem Verbundmaterial;
eine Rohlingheizung (22), die ausgebildet ist, um den Rohling (16) auf eine Schmelztemperatur zu erhitzen, die über der Kristallisationstemperatur des Verbundmaterials liegt, um einen erhitzten Rohling (16) zu definieren;
eine Presse (26), die in eine geöffnete Position bewegbar ist, um eine Öffnung (27) zu präsentieren, um den erhitzten Rohling (16) aufzunehmen, und in eine geschlossene Position bewegbar ist, um den erhitzten Rohling (16) zu stanzen, wobei die Presse (26) ein Werkzeug (29) einschließt, das eine vorbestimmte Konfiguration aufweist, die ausgebildet ist, um den erhitzten Rohling (16) auf die vorbestimmte Konfiguration des Werkzeugs (29) zu ändern, wenn die Presse (26) in der geschlossenen Position ist, um den erhitzten Rohling (16) zu stanzen; und
eine Wärmeübertragungskomponente (32), die mit dem erhitzten Rohling (16) und dem Werkzeug (29) zusammenwirkt, um das Erreichen der Kristallisationstemperatur des erhitzten Rohlings (16) zu verzögern, wenn der erhitzte Rohling (16) in der Öffnung (27) der Presse (26) angeordnet ist.

2. Stanzsystem (12) nach Anspruch 1, wobei die Wärmeübertragungskomponente (32) eine erste Auskleidung (34) und eine zweite Auskleidung (36) einschließt, wobei jede der ersten Auskleidung (34) und der zweiten Auskleidung (36) eine Barriere bildet, die ausgebildet ist, um das Erreichen der Kristallisationstemperatur des erhitzten Rohlings (16) zu verzögern.

3. Stanzsystem (12) nach Anspruch 2, wobei:
das Werkzeug (29) eine erste Fläche (28) und eine zweite Fläche (30) einschließt, die einander zugewandt sind, und die Öffnung (27) zwischen der ersten Fläche (28) und der zweiten Fläche (30) angeordnet ist, wenn die Presse (26) in der geöffneten Position ist;
die erste Auskleidung (34) die erste Fläche (28) des Werkzeugs (29) bedeckt und die zweite Auskleidung (36) die zweite Fläche (30) des Werkzeugs (29) bedeckt; und
die erste Auskleidung (34) an einer ersten Seite (18) des erhitzten Rohlings (16) anliegt und die zweite Auskleidung (36) an einer zweiten Seite (20) des erhitzten Rohlings (16) anliegt, wenn auf den erhitzten Rohling (16) Druck ausgeübt wird.

4. Stanzsystem (12) nach Anspruch 2, wobei:
das Werkzeug (29) eine erste Fläche (28) und eine zweite Fläche (30) einschließt, die einander zugewandt sind, und die Öffnung (27) zwischen der ersten Fläche (28) und der zweiten Fläche (30) angeordnet ist, wenn die Presse (26) in der geöffneten Position ist;
der Rohling (16) eine erste Seite (18) einschließt, die die erste Auskleidung (34) aufweist, die die erste Seite (18) bedeckt, und eine zweite Seite (20), die die zweite Auskleidung (36) aufweist, die die zweite Seite (20) bedeckt; und
die erste Auskleidung (34) an der ersten Fläche (28) des Werkzeugs (29) anliegt und die zweite Auskleidung (36) an der zweiten Fläche (30) des Werkzeugs (29) anliegt, wenn über das Werkzeug (29) durch die Presse (26) Druck auf den erhitzten Rohling (16) ausgeübt wird, was die Wärmeübertragung vom erhitzten Rohling (16) verlangsamt, um das Erreichen der Kristallisationstemperatur des erhitzten Rohlings (16) zu verzögern;
wobei die Presse (26) optional in die geschlossene Position bewegbar ist, um durch das Werkzeug (29) Druck auf den erhitzten Rohling (16) auszuüben, um die Verbundkomponente (14) zu formen, wobei die Wärmeübertragungskomponente (32) die Wärmeübertragung vom erhitzten Rohling (16) verlangsamt, wenn die Presse (26) geschlossen ist, um das Erreichen der Kristallisationstemperatur des erhitzten Rohlings (16) zu verzögern;
wobei das Stanzsystem (12) weiter optional weiter einen Endeffektor (38) einschließt, der ausgebildet ist, um die erste Auskleidung (34) und die zweite Auskleidung (36) von der Verbundkomponente (14) zu entfernen, wenn die Presse (26) nach dem Formen der Verbundkomponente (14) wieder geöffnet wird.

5. Stanzsystem (12) nach Anspruch 2:
weiter einschließend eine Auskleidungsheizung (40), die ausgebildet ist, um die erste Auskleidung (34) und die zweite Auskleidung (36) auf eine vorbestimmte Temperatur zu erhitzen, um eine erhitzte erste Auskleidung (34) und eine erhitzte zweite Auskleidung (36) zu definieren; und
wobei der erhitzte Rohling (16), die erhitzte erste Auskleidung (34) und die erhitzte zweite Auskleidung (36) in der Öffnung (27) der Presse (26) so angeordnet sind, dass die erhitzte erste Auskleidung (34) zwischen einer ersten Seite (18) des erhitzten Rohlings (16) und dem Werkzeug (29) angeordnet ist und die erhitzte zweite Auskleidung (36) zwischen einer zweiten Seite (20) des erhitzten Rohlings (16) und dem Werkzeug (29) angeordnet ist.

6. Stanzsystem (12) nach Anspruch 1, wobei die Wärmeübertragungskomponente (32) eine Werkzeugheizung (42) einschließt, die ausgebildet ist, um eine erste Fläche (28) des Werkzeugs (29) und eine zweite Fläche (30) des Werkzeugs (29) innerhalb der Öffnung (27) der Presse (26) zu erhitzen;
wobei die Werkzeugheizung (42) optional eine bewegbare Plattform (24) einschließt, die ausgebildet ist, um die Werkzeugheizung (42) in einem anfänglichen Heizzustand in die Öffnung (27) der Presse (26) zu bewegen, um die erste Fläche (28) und die zweite Fläche (30) auf eine vorbestimmte Temperatur zu erhitzen, und sich in einem endgültigen erhitzten Zustand aus der Öffnung (27) der Presse (26) herauszubewegen, wenn die vorbestimmte Temperatur erreicht ist.

7. Stanzsystem (12) nach Anspruch 1 oder 2, wobei die Presse (26) in die geschlossene Position bewegbar ist, um durch das Werkzeug (29) einen Druck auf den erhitzten Rohling (16) auszuüben, um die Verbundkomponente (14) zu formen, wobei die Wärmeübertragungskomponente (32) die Wärmeübertragung vom erhitzten Rohling (16) verlangsamt, wenn die Presse (26) geschlossen ist, um das Erreichen der Kristallisationstemperatur des erhitzten Rohlings (16) zu verzögern.

8. Stanzsystem (12) nach einem der Ansprüche 2 bis 6, wobei die erste Auskleidung (34) und die zweite Auskleidung (36) als ein Film, eine Schicht oder eine Folie geformt sind.

9. Verfahren zum Stanzformen einer Verbundkomponente (14) für eine Struktur (10), wobei das Verfahren Folgendes umfasst:
Erhitzen eines Rohlings (16) über eine Rohlingheizung (22) auf eine Schmelztemperatur, die über einer Kristallisationstemperatur liegt, um einen erhitzten Rohling (16) zu definieren, wobei der Rohling (16) aus einem Verbundmaterial geformt ist;
Einführen des erhitzten Rohlings (16) in eine Öffnung (27) einer Presse (26);
Schließen der Presse (26) über dem erhitzten Rohling (16);
Ausüben eines Drucks auf den erhitzten Rohling (16), während die Presse (26) geschlossen ist, um den erhitzten Rohling (16) zu stanzen, wobei die Presse (26) ein Werkzeug (29) einschließt, das eine vorbestimmte Konfiguration aufweist, die ausgebildet ist, um den erhitzten Rohling (16) in die vorbestimmte Konfiguration des Werkzeugs (29) zu ändern, wenn die Presse (26) den Druck auf den erhitzten Rohling (16) ausübt; und
Steuern, über eine Wärmeübertragungskomponente (32), der Wärmeübertragung zwischen dem erhitzten Rohling (16) und dem Werkzeug (29), um das Erreichen der Kristallisationstemperatur des erhitzten Rohlings (16) zu verzögern.

10. Verfahren nach Anspruch 9, wobei:
die Wärmeübertragungskomponente (32) eine erste Auskleidung (34) und eine zweite Auskleidung (36) einschließt, wobei jede der ersten Auskleidung (34) und der zweiten Auskleidung (36) eine Barriere bildet, um das Erreichen der Kristallisationstemperatur zu verzögern; und
Steuern, über die Wärmeübertragungskomponente (32), der Wärmeübertragung zwischen dem erhitzten Rohling (16) und dem Werkzeug (29), weiter Steuern, über die erste Auskleidung (34) und die zweite Auskleidung (36), der Wärmeübertragung zwischen dem erhitzten Rohling (16) und dem Werkzeug (29), um das Erreichen der Kristallisationstemperatur des erhitzten Rohlings (16) zu verzögern, umfasst.

11. Verfahren nach Anspruch 10, wobei:
das Werkzeug (29) eine erste Fläche (28) und eine zweite Fläche (30) einschließt, die einander zugewandt sind, und die Öffnung (27) zwischen der ersten Fläche (28) und der zweiten Fläche (30) angeordnet ist, wenn die Presse (26) in der geöffneten Position ist;
die erste Auskleidung (34) die erste Fläche (28) des Werkzeugs (29) bedeckt und die zweite Auskleidung (36) die zweite Fläche (30) des Werkzeugs (29) bedeckt; und
Steuern, über die erste Auskleidung (34) und die zweite Auskleidung (36), der Wärmeübertragung zwischen dem erhitzten Rohling (16) und dem Werkzeug (29) weiter Anlegen der ersten Auskleidung (34) an eine erste Seite (18) des erhitzten Rohlings (16) und Anlegen der zweiten Auskleidung (36) an eine zweite Seite (20) des erhitzten Rohlings (16) umfasst, wenn über die Presse (26) Druck auf den erhitzten Rohling (16) ausgeübt wird.

12. Verfahren nach Anspruch 10, wobei:
das Werkzeug (29) eine erste Fläche (28) und eine zweite Fläche (30) einschließt, die einander zugewandt sind, und die Öffnung (27) zwischen der ersten Fläche (28) und der zweiten Fläche (30) angeordnet ist, wenn die Presse (26) in der geöffneten Position ist;
der Rohling (16) eine erste Seite (18) einschließt, die die erste Auskleidung (34) aufweist, die die erste Seite (18) bedeckt, und eine zweite Seite (20), die die zweite Auskleidung (36) aufweist, die die zweite Seite (20) bedeckt; und
Steuern, über die erste Auskleidung (34) und die zweite Auskleidung (36), der Wärmeübertragung zwischen dem erhitzten Rohling (16) und dem Werkzeug (29) weiter Anlegen der ersten Fläche (28) des Werkzeugs (29) an die erste Auskleidung (34) und Anlegen der zweiten Fläche (30) des Werkzeugs (29) an die zweite Auskleidung (36), wenn über die Presse (26) Druck auf den erhitzten Rohling (16) ausgeübt wird, umfasst;
optional, wobei das Verfahren weiter Folgendes umfasst:
Formen der Verbundkomponente (14) durch Pressen des erhitzten Rohlings (16) in der Presse (26);
Entfernen der Verbundkomponente (14) aus der Presse (26) nach dem Formen der Verbundkomponente (14);
Entfernen der ersten Auskleidung (34) von der ersten Seite (18) der Verbundkomponente (14) nach dem Entfernen der Verbundkomponente (14) aus dem Werkzeug (29); und
Entfernen der zweiten Auskleidung (36) von der zweiten Seite (20) der Verbundkomponente (14) nach dem Entfernen der Verbundkomponente (14) aus dem Werkzeug (29).

13. Verfahren nach Anspruch 10:
weiter umfassend Erhitzen der ersten Auskleidung (34) und der zweiten Auskleidung (36) über eine Auskleidungsheizung (40), um eine erhitzte erste Auskleidung (34) und eine erhitzte zweite Auskleidung (36) zu definieren; und
wobei Einführen des erhitzten Rohlings (16) in die Öffnung (27) der Presse (26) weiter Einführen der erhitzten ersten Auskleidung (34), der erhitzten zweiten Auskleidung (36) und des erhitzten Rohlings (16) in die Öffnung (27) der Presse (26) umfasst, sodass die erhitzte erste Auskleidung (34) zwischen einer ersten Seite (18) des erhitzten Rohlings (16) und dem Werkzeug (29) angeordnet ist, und die erhitzte zweite Auskleidung (36) zwischen einer zweiten Seite (20) des erhitzten Rohlings (16) und dem Werkzeug (29) angeordnet ist;
optional, wobei Erhitzen des Rohlings (16) über die Rohlingheizung (22) und Erhitzen der ersten Auskleidung (34) und der zweiten Auskleidung (36) über die Auskleidungsheizung (40) vor dem Einführen des Rohlings (16) in die Öffnung (27) der Presse (26) erfolgt.
weiter optional, wobei Erhitzen des Rohlings (16) über die Rohlingheizung (22) und Erhitzen der ersten Auskleidung (34) und der zweiten Auskleidung (36) über die Auskleidungsheizung (40) gleichzeitig erfolgt.

14. Verfahren nach Anspruch 9:
wobei die Wärmeübertragungskomponente (32) eine Werkzeugheizung (42) einschließt; und
weiter umfassend Erhitzen einer ersten Fläche (28) des Werkzeugs (29) über die Werkzeugheizung (42) und Erhitzen einer zweiten Fläche (30) des Werkzeugs (29) über die Werkzeugheizung (42) vor dem Einführen des erhitzten Rohlings (16) in die Öffnung (27) der Presse (26);
optional, weiter umfassend das Entfernen der Werkzeugheizung (42) aus der Öffnung (27) der Presse (26); und
wobei Entfernen der Werkzeugheizung (42) vor dem Einführen des erhitzten Rohlings (16) in die Öffnung (27) der Presse (26) erfolgt.

15. Verfahren nach einem der Ansprüche 10 bis 13, wobei die erste Auskleidung (34) und die zweite Auskleidung (36) als ein Film, eine Schicht oder eine Folie geformt sind.

## Revendications

1. Système d'estampage (12) pour former un composant composite (14) pour une structure (10), le système d'estampage (12) comprenant :
un flan (16) formé d'un matériau composite ;
un dispositif de chauffage du flan (22) configuré pour chauffer le flan (16) à une température de fusion qui est supérieure à une température de cristallisation du matériau composite pour définir un flan chauffé (16) ;
une presse (26) mobile vers une position ouverte pour présenter une ouverture (27) pour recevoir le flan chauffé (16) et mobile vers une position fermée pour estamper le flan chauffé (16), dans laquelle la presse (26) inclut un outillage (29) présentant une configuration prédéterminée configurée pour changer le flan chauffé (16) vers la configuration prédéterminée de l'outillage (29) lorsque la presse (26) est dans la position fermée pour estamper le flan chauffé (16) ; et
un composant de transfert thermique (32) coopérant avec le flan chauffé (16) et l'outillage (29) pour retarder l'atteinte de la température de cristallisation du flan chauffé (16) lorsque le flan chauffé (16) est disposé dans l'ouverture (27) de la presse (26).

2. Système d'estampage (12) selon la revendication 1 dans lequel le composant de transfert thermique (32) inclut un premier intercalaire (34) et un deuxième intercalaire (36), dans lequel le premier intercalaire (34) et le deuxième intercalaire (36) créent chacun une barrière configurée pour retarder l'atteinte de la température de cristallisation du flan chauffé (16).

3. Système d'estampage (12) selon la revendication 2 dans lequel :
l'outillage (29) inclut une première face (28) et une deuxième face (30) se faisant face l'une à l'autre et l'ouverture (27) est disposée entre la première face (28) et la deuxième face (30) lorsque la presse (26) est dans la position ouverte ;
le premier intercalaire (34) recouvre la première face (28) de l'outillage (29) et le deuxième intercalaire (36) recouvre la deuxième face (30) de l'outillage (29) ; et
le premier intercalaire (34) vient en butée contre un premier côté (18) du flan chauffé (16) et le deuxième intercalaire (36) vient en butée contre un deuxième côté (20) du flan chauffé (16) lorsqu'une pression est appliquée sur le flan chauffé (16).

4. Système d'estampage (12) selon la revendication 2 dans lequel :
l'outillage (29) inclut une première face (28) et une deuxième face (30) se faisant face l'une à l'autre et l'ouverture (27) est disposée entre la première face (28) et la deuxième face (30) lorsque la presse (26) est dans la position ouverte ;
le flan (16) inclut un premier côté (18) ayant le premier intercalaire (34) recouvrant le premier côté (18) et un deuxième côté (20) ayant le deuxième intercalaire (36) recouvrant le deuxième côté (20) ; et
le premier intercalaire (34) vient en butée contre la première face (28) de l'outillage (29) et le deuxième intercalaire (36) vient en butée contre la deuxième face (30) de l'outillage (29) lorsqu'une pression est appliquée au flan chauffé (16) via l'outillage (29) à travers la presse (26) qui ralentit le transfert thermique depuis le flan chauffé (16) pour retarder l'atteinte de la température de cristallisation du flan chauffé (16) ;
facultativement, dans lequel la presse (26) est mobile vers la position fermée pour appliquer une pression au flan chauffé (16) à travers l'outillage (29) pour former le composant composite (14), dans lequel le composant de transfert thermique (32) ralentit le transfert thermique depuis le flan chauffé (16) lorsque la presse (26) est fermée pour retarder l'atteinte de la température de cristallisation du flan chauffé (16) ;
facultativement en outre, dans lequel le système d'estampage (12) inclut en outre un effecteur terminal (38) configuré pour retirer le premier intercalaire (34) et le deuxième intercalaire (36) du composant composite (14) lorsque la presse (26) est rouverte après avoir formé le composant composite (14).

5. Système d'estampage (12) selon la revendication 2 :
incluant en outre un dispositif de chauffage des intercalaires (40) configuré pour chauffer le premier intercalaire (34) et le deuxième intercalaire (36) à une température prédéterminée pour définir un premier intercalaire chauffé (34) et un deuxième intercalaire chauffé (36) ; et
dans lequel le flan chauffé (16), le premier intercalaire chauffé (34) et le deuxième intercalaire chauffé (36) sont disposés dans l'ouverture (27) de la presse (26) de telle sorte que le premier intercalaire chauffé (34) est disposé entre un premier côté (18) du flan chauffé (16) et l'outillage (29) et le deuxième intercalaire chauffé (36) est disposé entre un deuxième côté (20) du flan chauffé (16) et l'outillage (29).

6. Système d'estampage (12) selon la revendication 1 dans lequel le composant de transfert thermique (32) inclut un dispositif de chauffage de l'outillage (42) configuré pour chauffer une première face (28) de l'outillage (29) et une deuxième face (30) de l'outillage (29) à l'intérieur de l'ouverture (27) de la presse (26) ;
facultativement, dans lequel le dispositif de chauffage de l'outillage (42) inclut une plateforme mobile (24) configurée pour déplacer le dispositif de chauffage de l'outillage (42) dans l'ouverture (27) de la presse (26) dans un état de chauffage initial pour chauffer la première face (28) et la deuxième face (30) à une température prédéterminée, et pour le déplacer hors de l'ouverture (27) de la presse (26) dans un état chauffé final lorsque la température prédéterminée est atteinte.

7. Système d'estampage (12) selon la revendication 1 ou la revendication 2 dans lequel la presse (26) est mobile vers la position fermée pour appliquer une pression au flan chauffé (16) à travers l'outillage (29) pour former le composant composite (14), dans lequel le composant de transfert thermique (32) ralentit le transfert thermique depuis le flan chauffé (16) lorsque la presse (26) est fermée pour retarder l'atteinte de la température de cristallisation du flan chauffé (16).

8. Système d'estampage (12) selon l'une quelconque des revendications 2 à 6, dans lequel le premier intercalaire (34) et le deuxième intercalaire (36) sont sous la forme d'un film, d'une couche ou d'une feuille.

9. Procédé de formage par estampage d'un composant composite (14) pour une structure (10), le procédé comprenant les étapes consistant à :
chauffer un flan (16) à une température de fusion qui est supérieure à une température de cristallisation via un dispositif de chauffage du flan (22) pour définir un flan chauffé (16), dans lequel le flan (16) est formé d'un matériau composite ;
insérer le flan chauffé (16) dans une ouverture (27) d'une presse (26) ;
fermer la presse (26) sur le flan chauffé (16) ;
appliquer une pression au flan chauffé (16) tandis que la presse (26) est fermée pour estamper le flan chauffé (16), dans lequel la presse (26) inclut un outillage (29) présentant une configuration prédéterminée configurée pour changer le flan chauffé (16) vers la configuration prédéterminée de l'outillage (29) lorsque la presse (26) applique la pression au flan chauffé (16) ; et
contrôler, via un composant de transfert thermique (32), le transfert thermique entre le flan chauffé (16) et l'outillage (29) pour retarder l'atteinte de la température de cristallisation du flan chauffé (16).

10. Procédé selon la revendication 9 dans lequel :
le composant de transfert thermique (32) inclut un premier intercalaire (34) et un deuxième intercalaire (36), le premier intercalaire (34) et le deuxième intercalaire (36) créent chacun une barrière pour retarder l'atteinte de la température de cristallisation ; et
le contrôle, via le composant de transfert thermique (32), du transfert thermique entre le flan chauffé (16) et l'outillage (29) comprend en outre contrôler, via le premier intercalaire (34) et le deuxième intercalaire (36), le transfert thermique entre le flan chauffé (16) et l'outillage (29) pour retarder l'atteinte de la température de cristallisation du flan chauffé (16).

11. Procédé selon la revendication 10 dans lequel :
l'outillage (29) inclut une première face (28) et une deuxième face (30) se faisant face l'une à l'autre et l'ouverture (27) est disposée entre la première face (28) et la deuxième face (30) lorsque la presse (26) est dans la position ouverte ;
le premier intercalaire (34) recouvre la première face (28) de l'outillage (29) et le deuxième intercalaire (36) recouvre la deuxième face (30) de l'outillage (29) ; et
le contrôle, via le premier intercalaire (34) et le deuxième intercalaire (36), du transfert thermique entre le flan chauffé (16) et l'outillage (29) comprend en outre le fait de faire venir en butée le premier intercalaire (34) contre un premier côté (18) du flan chauffé (16) et faire venir en butée le deuxième intercalaire (36) contre un deuxième côté (20) du flan chauffé (16) lors de l'application d'une pression sur le flan chauffé (16) via la presse (26).

12. Procédé selon la revendication 10 dans lequel :
l'outillage (29) inclut une première face (28) et une deuxième face (30) se faisant face l'une à l'autre et l'ouverture (27) est disposée entre la première face (28) et la deuxième face (30) lorsque la presse (26) est dans la position ouverte ;
le flan (16) inclut un premier côté (18) ayant le premier intercalaire (34) recouvrant le premier côté (18) et un deuxième côté (20) ayant le deuxième intercalaire (36) recouvrant le deuxième côté (20) ; et
le contrôle, via le premier intercalaire (34) et le deuxième intercalaire (36), du transfert thermique entre le flan chauffé (16) et l'outillage (29) comprend en outre le fait de faire venir en butée la première face (28) de l'outillage (29) contre le premier intercalaire (34) et faire venir en butée la deuxième face (30) de l'outillage (29) contre le deuxième intercalaire (36) lors de l'application d'une pression sur le flan chauffé (16) via la presse (26) ;
facultativement, dans lequel le procédé comprend en outre :
former le composant composite (14) à partir du pressage du flan chauffé (16) dans la presse (26) ;
retirer le composant composite (14) de la presse (26) après avoir formé le composant composite (14) ;
retirer le premier intercalaire (34) du premier côté (18) du composant composite (14) après avoir retiré le composant composite (14) de l'outillage (29) ; et
retirer le deuxième intercalaire (36) du deuxième côté (20) du composant composite (14) après avoir retiré le composant composite (14) de l'outillage (29).

13. Procédé selon la revendication 10 :
comprenant en outre chauffer le premier intercalaire (34) et le deuxième intercalaire (36) via un dispositif de chauffage (40) des intercalaires pour définir un premier intercalaire chauffé (34) et un deuxième intercalaire chauffé (36) ; et
dans lequel l'insertion du flan chauffé (16) dans l'ouverture (27) de la presse (26) comprend en outre insérer le premier intercalaire chauffé (34), le deuxième intercalaire chauffé (36) et le flan chauffé (16) dans l'ouverture (27) de la presse (26) de telle sorte que le premier intercalaire chauffé (34) est disposé entre un premier côté (18) du flan chauffé (16) et l'outillage (29), et le deuxième intercalaire chauffé (36) est disposé entre un deuxième côté (20) du flan chauffé (16) et l'outillage (29) ;
facultativement, dans lequel chauffer le flan (16) via le dispositif de chauffage du flan (22) et chauffer le premier intercalaire (34) et le deuxième intercalaire (36) via le dispositif de chauffage des intercalaires (40) se produit avant d'insérer le flan (16) dans l'ouverture (27) de la presse (26).
facultativement en outre, dans lequel le chauffage du flan (16) via le dispositif de chauffage du flan (22) et le chauffage du premier intercalaire (34) et le deuxième intercalaire (36) via le dispositif de chauffage des intercalaires (40) se produisent en même temps.

14. Procédé selon la revendication 9 :
dans lequel le composant de transfert thermique (32) inclut un dispositif de chauffage de l'outillage (42) ; et
comprenant en outre chauffer une première face (28) de l'outillage (29) via le dispositif de chauffage de l'outillage (42) et chauffer une deuxième face (30) de l'outillage (29) via le dispositif de chauffage de l'outillage (42) avant d'insérer le flan chauffé (16) dans l'ouverture (27) de la presse (26) ;
facultativement, comprenant en outre le retrait du dispositif de chauffage de l'outillage (42) de l'ouverture (27) de la presse (26) ; et
dans lequel retirer le dispositif de chauffage de l'outillage (42) se produit avant d'insérer le flan chauffé (16) dans l'ouverture (27) de la presse (26).

15. Procédé selon l'une quelconque des revendications 10 à 13, dans lequel le premier intercalaire (34) et le deuxième intercalaire (36) sont sous la forme d'un film, d'une couche ou d'une feuille.
